# EUROPEAN PATENT SPECIFICATION

(11) **EP 2 905 440 B1**
(45) Date of publication and mention of the grant of the patent: **05.04.2017**
(21) Application number: 12871607.3
(22) Date of filing: 23.08.2012
(51) Int. Cl.: F01N 3/20

(54) **REDUCING AGENT SUPPLY DEVICE**
REDUKTIONSMITTEL-ZUFÜHRVORRICHTUNG
DISPOSITIF D'ALIMENTATION EN AGENT RÉDUCTEUR

(43) Date of publication of application: 12.08.2015
(73) Proprietor: TOYOTA JIDOSHA KABUSHIKI KAISHA, Toyota-shi, Aichi-ken, 471-8571 (JP)
(72) Inventor: OTA, Hirohiko, Toyota-shi, Aichi-ken, 471-8571 (JP)
(74) Representative: Kuhnen & Wacker
(86) International application number: PCT/JP2012/071304
(87) International publication number: WO 2014/030241

(56) References cited:
- EP-A2- 2 682 579
- EP-A2- 2 682 580
- DE-A1-102006 061 733
- JP-A- 2005 036 784
- JP-A- 2005 127 318
- JP-A- 2009 097 476
- JP-A- 2009 097 479

## Description

### TECHNICAL FIELD

The present invention relates to a reducing agent feeder.

### BACKGROUND ART

Vehicle-mounted internal combustion engines are known that are provided with a selective reduction type NOx purification catalyst and a reducing agent feeder, which feeds a reducing agent solution such as aqueous urea solution to the NOx purification catalyst, in an exhaust passage. The reducing agent feeder is provided with an addition valve, which receives a supply of the pressurized reducing agent solution. The feeder adds the reducing agent solution from the above mentioned addition valve to a section upstream from the NOx purification catalyst in the exhaust passage. When the reducing agent solution (aqueous urea solution) added through the addition valve of the reducing agent feeder hydrolyzes in response to the heat of the exhaust gas, ammonia (NH₃) generated therefrom flows into the NOx purification catalyst to be used for purification of the NOx in the catalyst. That is, with the above mentioned NOx purification catalyst, the NOx in the exhaust gas is reduced by the above-mentioned ammonia so that nitrogen (N₂) and water (H₂O) are generated. As shown in Patent Document 1, it has also been considered that a cooling fin for heat dissipation be formed in the addition valve of the reducing agent feeder.

### Prior Art Document

### Patent Document

Patent Document 1: Japanese Patent No. 4886857 B2 & DE 10 2006 061733 A

### SUMMARY OF THE INVENTION

### Problems that the Invention is to Solve

In the case where a high load operation of the internal combustion engine at a low vehicle speed is performed, for example, when the vehicle is running uphill, the heat dissipation through the addition valve due to relative wind onto the cooling fin caused cannot be expected. At the same time, however, the addition valve receives heat from the exhaust gas at high temperature passing through the exhaust passage. Accordingly, the addition valve is likely to be heated to a high temperature. When the high-pressure reducing agent solution present in the addition valve becomes hot while maintaining the liquid form because the addition valve becomes hot, the metal material forming the addition valve is likely to corrode accordingly.

Accordingly, it is an object of the present invention to provide a reducing agent feeder that can limits the corrosion of the addition valve.

### Means for Solving the Problems

To achieve the above described object, according to a reducing agent feeder of the present invention as defined in claim 1, a reducing agent solution is added through an addition valve to an exhaust passage of an internal combustion engine in response to a supply of the reducing agent solution pressurized to a prescribed value. Accordingly, the reducing agent solution added to the exhaust passage is used such that the NOx in the exhaust gas is reduced to be purified by the NOx purification catalyst provided in the exhaust passage. When a temperature of the addition valve is greater than or equal to a reference value, a pressure of the reducing agent solution supplied to the addition valve is lowered from the prescribed value to a value at which a boiling point of the reducing agent solution is less than the reference value by a pressure control portion. When the pressure of the reducing agent solution supplied to the addition valve is lowered, the boiling point of the reducing agent solution present in the addition valve is lowered as well so that the state of the reducing agent solution transitions from the liquid state to the gas state. In the state in which the reducing agent solution present in the addition valve is in the gas state, even if the reducing agent solution becomes hot, the metal material forming the addition valve does not corrode. Accordingly, the phenomenon that the reducing agent solution in the addition valve becomes hot while maintaining the liquid form to corrode the metal material forming the addition valve is avoided.

According to an aspect of the present invention, the pressure of the reducing agent solution is increased to the prescribed value when the temperature of the addition valve is less than the reference value while the pressure of the reducing agent solution supplied to the addition valve is lowered by the pressure control portion. Accordingly, the lowering of the pressure of the reducing agent solution by the pressure control portion can be appropriately ended.

According to an aspect of the present invention, when the pressure of the reducing agent solution supplied to the addition valve is lowered from the prescribed value by the pressure control portion, the addition of the reducing agent solution through the addition valve to the exhaust passage is inhibited. When the pressure of the reducing agent solution supplied to the addition valve is lowered from the prescribed value, the reducing agent solution present in the addition valve transitions from the liquid state to the gas state. Accordingly, the reducing agent solution present in the addition valve is likely to be in the state in which the liquid and the gas are mixed. If the reducing agent solution is added through the addition valve to the exhaust passage in such a state, the accuracy of adjustment of an amount of the addition of the reducing agent solution through the addition valve is impaired, or the reducing agent solution added through the addition valve is difficult to be atomized. As a result, only a part of the reducing agent in the exhaust gas, which passes through the exhaust passage, becomes dense to cause a phenomenon that the dense part of the reducing agent is likely to pass through the catalyst because the part fails to be fully absorbed by the NOx purification catalyst. However, when the pressure of the reducing agent solution supplied to the addition valve is lowered from the prescribed value, the addition of the reducing agent solution through the addition valve to the exhaust passage is inhibited to avoid the above described phenomenon.

According to an aspect of the present invention, in a case where the addition of the reducing agent solution through the addition valve to the exhaust passage is inhibited, if an amount of NOx in exhaust gas flowing through the exhaust passage is greater than or equal to a threshold value, the pressure of the reducing agent solution supplied to the addition valve is increased to the prescribed value during only a predetermined period to execute addition of the reducing agent solution through the addition valve. Thereby, in the case where the addition of the reducing agent solution through the addition valve is inhibited, when the amount of the NOx in the exhaust gas increases, the reducing agent solution is temporarily added through the addition valve so that the NOx can be purified by the above described NOx purification catalyst. This limits the likelihood of the corrosion of the addition valve and the phenomenon that the reducing agent passes through the NOx purification catalyst. Also, the NOx is purified by the NOx purification catalyst when the amount of the NOx in the exhaust gas increases while the addition is inhibited.

### BRIEF DESCRIPTION OF THE DRAWINGS

Fig.1 is a diagram schematically illustrating the entire internal combustion engine to which a reducing agent feeder is applied;
Fig. 2 is a flowchart illustrating the procedure of controlling the pressure of aqueous urea solution supplied to an addition valve;
Fig. 3 is a graph showing the change tendency of a coefficient α with respect to changes in an ambient temperature and an exhaust gas temperature;
Fig. 4 is an explanatory diagram illustrating the change tendency of a correction value β with respect to changes in vehicle speed;
Fig. 5 is a flowchart illustrating the procedure of inhibiting or allowing the addition of the aqueous urea solution through the addition valve;
Fig. 6 is a flowchart illustrating the procedure of inhibiting or allowing the addition of the aqueous urea solution through the addition valve; and
Fig. 7 is an explanatory diagram illustrating the change tendency of a threshold value γ with respect to changes in an addition valve temperature.

### MODES FOR CARRYING OUT THE INVENTION

### First Embodiment

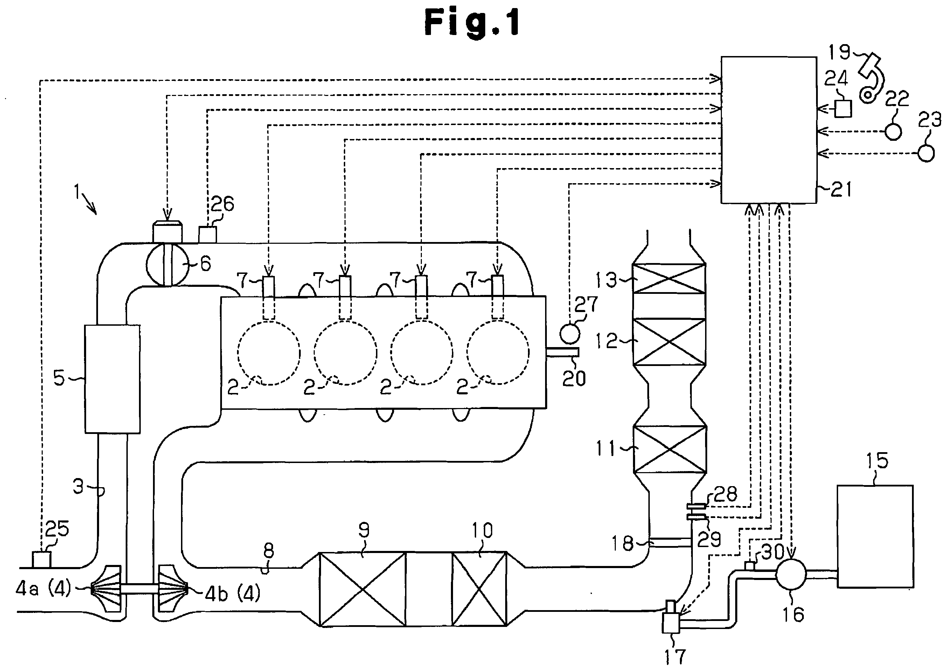

Hereinafter, a reducing agent feeder according to a first embodiment will be described with reference to Figs. 1 to 4.

As shown in Fig. 1, an intake passage 3 is connected to combustion chambers 2 of an internal combustion engine 1 mounted on a vehicle. A compressor wheel 4a of a turbocharger 4, an intercooler 5, and an intake throttle valve 6 are provided in the intake passage 3 from upstream to downstream in this order. Air that has passed through the above described intake passage 3 is suctioned by the combustion chambers 2 of the internal combustion engine 1, and the fuel from fuel injection valves 7 is injected to be supplied to the combustion chambers 2. The fuel burns in the combustion chambers 2 to drive the internal combustion engine 1. In contrast, exhaust gas that has been generated by burning the fuel in the combustion chambers 2 is supplied to an exhaust passage 8 connected to the combustion chambers 2. A turbine wheel 4b of the turbocharger 4, a first oxidation catalyst 9, a filter 10, a first NOx purification catalyst 11, a second NOx purification catalyst 12, and a second oxidation catalyst 13 are provided in the exhaust passage 8 from upstream to downstream in this order.

The above described first oxidation catalyst 9 oxidizes and purifies carbon monoxide (CO) and hydrocarbon (HC), and the above described filter 10 collects particulate matter (PM) in the exhaust gas. The above described first NOx purification catalyst 11 and the second NOx purification catalyst 12 correspond to selective reduction type catalysts, which reduce and purify the NOx in the exhaust gas using the reducing agent solution such as aqueous urea solution. More specifically, the reducing agent solution is added to a section upstream from the first NOx purification catalyst 11 in the exhaust passage 8 so that the reducing agent solution (aqueous urea solution) hydrolyzes in response to the heat of the exhaust gas to generate ammonia (NH₃). The generated ammonia is absorbed by the first NOx purification catalyst 11 and the second NOx purification catalyst 12 so that the NOx is reduced by the catalysts. The NOx in the exhaust gas is purified by the above reduction. The above described second oxidation catalyst 13 oxidizes and processes the ammonia that has been flowed downstream out of the second NOx purification catalyst 12.

A reducing agent feeder for supplying a reducing agent (urea) to the exhaust passage 8 is provided in the internal combustion engine 1. The reducing agent feeder includes a tank 15 that stores the reducing agent solution (aqueous urea solution), a pump 16 that pumps and pressurizes the aqueous urea solution in the tank 15, and an addition valve 17 that receives supply of the aqueous urea solution pressurized by the pump 16. The aqueous urea solution is added through the addition valve 17 to a section that is upstream from the first NOx purification catalyst 11 and downstream from the filter 10 in the exhaust passage 8. The aqueous urea solution added through the addition valve 17 to the exhaust passage 8 is then dispersed to be finer mist by a dispersion plate 18 provided downstream from the addition valve 17 and upstream from the first NOx purification catalyst 11.

The reducing agent feeder is provided with an electronic control unit 21 for performing various controls on the internal combustion engine 1. The electronic control unit 21 includes a CPU that executes various computation processes related to various types of the controls, a ROM storing programs and data necessary for the control, a RAM for temporarily storing the computation results of the CPU, and input and output ports for inputting and outputting signals between the outside and the electronic control unit 21.

Various sensors shown below are connected to an input port of the electronic control unit 21, including:
- a vehicle speed sensor 22 that detects the running speed (vehicle speed) of the vehicle;
- an ambient temperature sensor 23 that detects the temperature of ambient air outside the vehicle;
- an accelerator position sensor 24 that detects the operation amount of an accelerator pedal 19 (accelerator operation amount), which is operated by the driver of the vehicle;
- an air flow meter 25 that detects the amount of air passing through the intake passage 3;
- an intake pressure sensor 26 that detects the pressure (intake pressure) at a section downstream the intake throttle valve 6 in the intake passage 3;
- a crank position sensor 27 for detecting rotation speed of a crankshaft 20 of the internal combustion engine 1;
- an exhaust gas temperature sensor 28 that detects the temperature of the exhaust gas upstream the first NOx purification catalyst 11 in the exhaust passage 8;
- an NOx sensor 29 that detects the amount of the NOx in the exhaust gas upstream the first NOx purification catalyst 11 in the exhaust passage 8; and
- a pressure sensor 30 that detects the pressure of the aqueous urea solution supplied to the addition valve 17.

A drive circuit of the fuel injection valves 7, a drive circuit of the intake throttle valve 6, a drive circuit of the pump 16, and a drive circuit of the addition valve 17, and the like are connected to an output port of the electronic control unit 21.

The electronic control unit 21 grasps the operating state of the internal combustion engine 1 on the basis of the detected signals supplied from the above described sensors. According to the grasped operating state, the electronic control unit 21 supplies command signals to the drive circuits of the devices connected to the output port. Accordingly, the control of injecting the fuel, the control of opening the intake throttle valve 6, the control of driving the pump 16, the control of driving the addition valve 17, and the like in the internal combustion engine 1 are performed through the electronic control unit 21. In the control of driving the pump 16, the pump 16 is driven such that the pressure of the aqueous urea solution supplied to the addition valve 17 becomes a prescribed value Pb defined as an optimum value in advance through to experiments. Also, in the control of driving the addition valve 17, the addition valve 17 is driven to be opened such that the amount of the aqueous urea solution added through the addition valve 17 becomes a value defined in accordance with the operating state of the internal combustion engine 1.

In the case where a high load operation of the internal combustion engine 1 at a low vehicle speed is performed, for example, when the vehicle is running uphill, relative wind onto the addition valve becomes less, while the temperature of the exhaust gas passing through the exhaust passage 8 becomes high. Accordingly, the dissipation of the heat through the addition valve 17 is limited, while the amount of the heat from the exhaust gas of the addition valve 17 is increased. In this case, when the aqueous urea solution present in the addition valve 17 becomes hot while maintaining the liquid form because the addition valve 17 becomes hot, the metal material forming the addition valve 17 is likely to corrode accordingly.

To eliminate such a problem, the electronic control unit 21 lowers the pressure of the aqueous urea solution supplied to the addition valve 17 from the above described prescribed value Pb through the control of driving the pump 16 when the temperature of the addition valve 17 is a value greater than or equal to a reference value M. More specifically, the pressure of the aqueous urea solution supplied to the addition valve 17 is lowered from the above described prescribed value Pb to a value (hereinafter, referred to as limit value P1) at which the boiling point of the aqueous urea solution is less than the above described reference value M. Accordingly, the electronic control unit 21, which lowers the pressure of the aqueous urea solution supplied to the addition valve 17, serves as a pressure control portion. As for the above described reference value M, it is considered that the reference value M be set to an optimum value in accordance with the material of the addition valve 17, and types and concentration of the reducing agent (urea) of the reducing agent solution (in this case, the aqueous urea solution).

Next, an operation of the reducing agent feeder will be described.

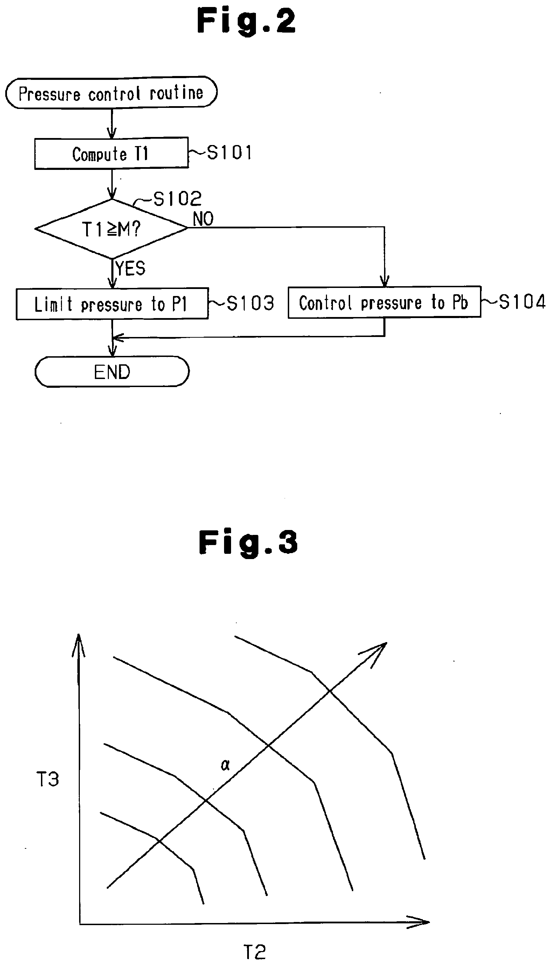

Fig. 2 is a flowchart illustrating a pressure control routine for controlling the pressure of the aqueous urea solution supplied to the addition valve 17. The pressure control routine is periodically executed as an interrupt by the electronic control unit 21, for example, at predetermined time intervals.

The electronic control unit 21 computes a temperature T1 of the addition valve 17 using the following equation "T1 = α·map(T2, T3)·β... (1)" on the basis of the ambient temperature T2 detected by the ambient temperature sensor 23, the exhaust gas temperature T3 detected by the exhaust gas temperature sensor 28, and the vehicle speed detected by the vehicle speed sensor 22 as a process of step S101 of the routine. Here, the member "map (T2, T3)" of the equation (1) shows a base value of the temperature of the addition valve 17, which is obtained with reference to a two-dimensional map set in advance through experiments on the basis of the ambient temperature T2 and the exhaust gas temperature T3. The lower the ambient temperature T2 is, the lower the member "map (T2, T3)" obtained as described above becomes. The higher the exhaust gas temperature T3 is, the higher the member becomes. The temperature T1 of the addition valve 17 is computed by multiplying the member "map (T2, T3)" by coefficient α and a correction value β.

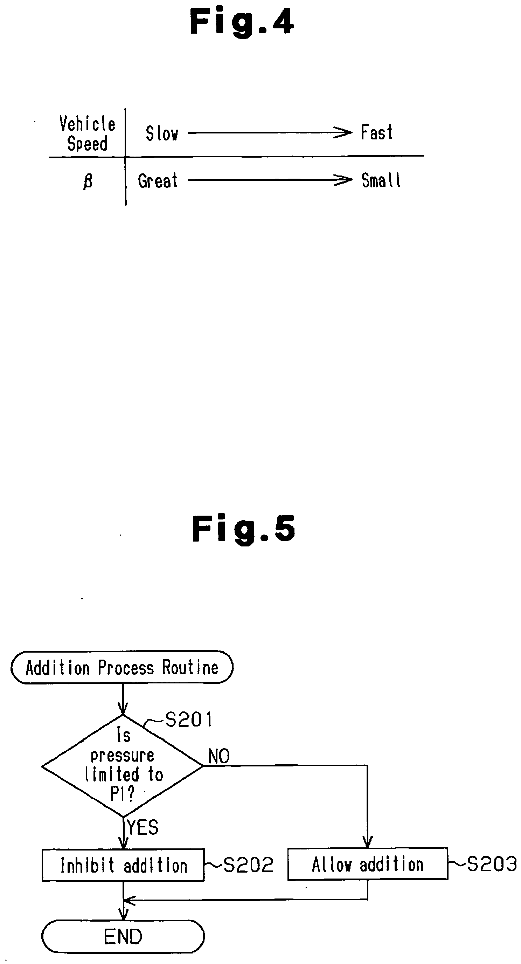

The above described coefficient α is a value for determining the sensitivity of the variation of the temperature T1 with respect to the variation of the member "map (T2, T3)" For example, as shown in Fig. 3, the coefficient α is variable in accordance with the ambient temperature T2 and the exhaust gas temperature T3. More specifically, the higher the ambient temperature T2 and the exhaust gas temperature T3 become, the greater the coefficient α becomes so that the above described sensitivity is increased. Further, the above described correction value β is a value for correcting the member "map (T2, T3)" in accordance with the vehicle speed. As shown in Fig. 4, the correction value β is variable such that the greater the amount of the relative wind against the addition valve 17 becomes due to the increasing vehicle speed, the lower the computed temperature T1 becomes.

The electronic control unit 21 determines whether or not the temperature T1 of the addition valve 17 is greater than or equal to the above described reference value M as a process of step S102. If it is determined that it is true, the electronic control unit 21 limits the pressure of the aqueous urea solution supplied to the addition valve 17 to the above described limit value P1 by the control of driving the pump 16 as a process of step S103. Thereby, the pressure of the aqueous urea solution supplied to the addition valve 17 is lowered from the above described prescribed value Pb to the limit value P1. Accordingly, the boiling point of the aqueous urea solution present in the addition valve 17 is lowered so that the aqueous urea solution transitions from the liquid state to the gas state. In the state in which the aqueous urea solution present in the addition valve 17 is in the gas state, even if the aqueous urea solution becomes hot, the metal material forming the addition valve 17 does not corrode. Accordingly, the phenomenon that the aqueous urea solution in the addition valve 17 becomes hot while maintaining the liquid form to corrode the metal material forming the addition valve 17 is avoided.

In contrast, if it is determined that it is false in the process of step S102, the electronic control unit 21 controls the pressure of the aqueous urea solution supplied to the addition valve 17 to the above described prescribed value Pb by the control of driving the pump 16 as a process of step S104. Accordingly, when the temperature T1 of the addition valve 17 becomes less than the reference value M while the pressure of the aqueous urea solution supplied to the addition valve 17 is lowered to the limit value P1, the pressure of the aqueous urea solution supplied to the addition valve 17 is increased to the prescribed value Pb. Thereby, the lowering of the pressure of the aqueous urea solution supplied to the addition valve 17 to the limit value P1 is appropriately ended.

The above described embodiment has the following advantages.
(1) When the temperature T1 of the addition valve 17 is a value greater than or equal to the reference value M, the pressure of the aqueous urea solution supplied to the addition valve 17 is limited to the limit value P1 such that it is lowered from the above described prescribed value Pb to the limit value P1. When the pressure of the aqueous urea solution supplied to the addition valve 17 is lowered as described above, the boiling point of the aqueous urea solution present in the addition valve 17 is lowered as well so that the aqueous urea solution transitions from the liquid state to the gas state. Accordingly, the phenomenon that the aqueous urea solution in the addition valve 17 becomes hot while maintaining the liquid form to corrode the metal material forming the addition valve 17 is avoided.
(2) The above described limit value P1 is a value at which the boiling point of the aqueous urea solution supplied to the addition valve 17 can be less than the reference value M. Accordingly, when the pressure of the aqueous urea solution supplied to the addition valve 17 is lowered to the limit value P1, the aqueous urea solution present in the addition valve 17 can reliably transition from the liquid state to the gas state.
(3) When the temperature T1 of the addition valve 17 becomes less than the reference value M while the pressure of the aqueous urea solution supplied to the addition valve 17 is lowered to the limit value P1, the pressure of the aqueous urea solution supplied to the addition valve 17 is increased to the prescribed value Pb. Thereby, the lowering of the pressure of the aqueous urea solution supplied to the addition valve 17 to the limit value P1 is appropriately ended.

### Second Embodiment

Next, a reducing agent feeder according to a second embodiment will be described with reference to Fig. 5.

According to the present embodiment, when the pressure of the aqueous urea solution supplied to the addition valve 17 is limited to the limit value P1, a process of inhibiting the addition of the aqueous urea solution through the addition valve 17 is added. Fig. 5 is a flowchart showing an addition process routine for performing such a process. The routine is also periodically executed as an interrupt by the electronic control unit 21 at predetermined time intervals.

The electronic control unit 21 determines whether or not the temperature T1 of the addition valve 17 is greater than or equal to the reference value M, and the pressure of the aqueous urea solution supplied to the addition valve 17 is limited to the limit value P1 as a process of step S201 of the routine. If it is determined that it is true, the electronic control unit 21 inhibits the addition of the aqueous urea solution through the addition valve 17 as a process of step S202. In contrast, if it is determined that it is false in step S201, the electronic control unit 21 allows the addition of the aqueous urea solution through the addition valve 17 as a process of step S203.

When the pressure of the aqueous urea solution supplied to the addition valve 17 is lowered from the prescribed value Pb to the limit value P1, the aqueous urea solution present in the addition valve 17 transitions from the liquid state to the gas state. Accordingly, the aqueous urea solution present in the addition valve 17 is likely to be in a mixture state of the liquid and the gas. Therefore, when the addition of the aqueous urea solution through the addition valve 17 is performed under such a state, the accuracy of adjusting the amount of the addition of the aqueous urea solution through the addition valve 17 is impaired or the aqueous urea solution added through the addition valve 17 is difficult to be atomized. As a result, only a part of the ammonia in the exhaust gas that passes through the exhaust passage 8 becomes dense to cause a phenomenon (i.e., ammonia slip) that the dense part of the ammonia is not completely absorbed by the first NOx purification catalyst 11 and the second NOx purification catalyst 12 and passes through the catalyst 12. However, when the pressure of the aqueous urea solution supplied to the addition valve 17 is lowered from the prescribed value Pb to the limit value P1, the addition of the aqueous urea solution through the addition valve 17 to the exhaust passage 8 is inhibited to avoid the above described phenomenon.

According to the present embodiment, the following advantage is obtained in addition to the advantages (1) to (3) obtained by the first embodiment.
(4) When the pressure of the aqueous urea solution supplied to the addition valve 17 is limited to the limit value P1, the occurrence of "ammonia slip" is avoided. The ammonia slip refers to a phenomenon in which the ammonia present in the exhaust gas due to the addition of the aqueous urea solution through the addition valve 17 is not completely absorbed by the first NOx purification catalyst 11 and the second NOx purification catalyst 12 and passes through the catalyst 12.

### Third Embodiment

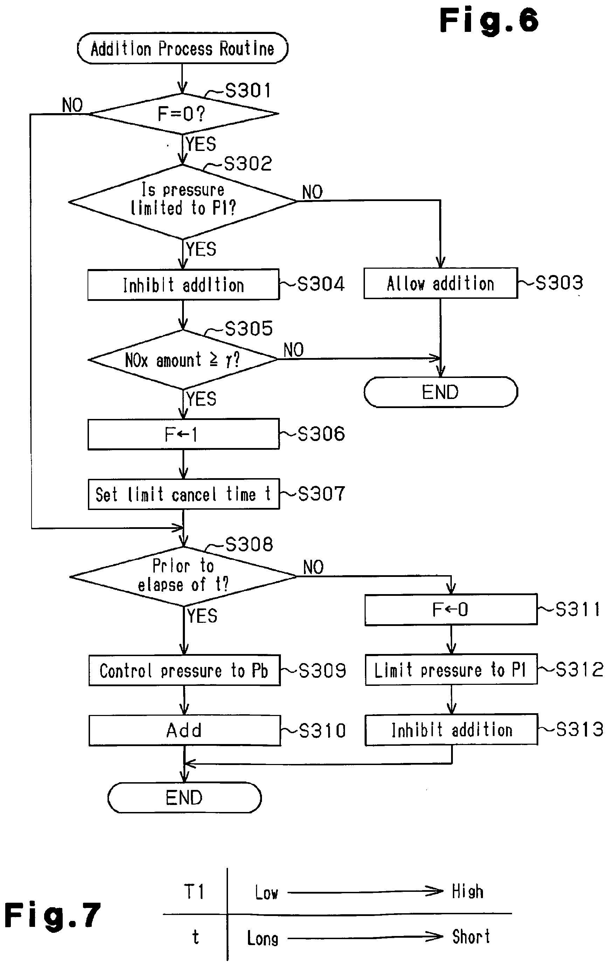

Next, a third embodiment of the reducing agent feeder will be described with reference to Figs. 6 and 7.

According to the present embodiment, the procedure of Fig. 6 is added to the procedure in the first embodiment. In the procedure, when the pressure of the aqueous urea solution supplied to the addition valve 17 is limited to the limit value P1, the addition of the aqueous urea solution through the addition valve 17 is inhibited, while the addition of the aqueous urea solution through the addition valve 17 is temporarily allowed when the amount of the NOx in the exhaust gas is high during a period in which the addition is inhibited. Fig. 6 is a flowchart showing an addition process routine to perform such procedure. The routine is periodically executed as an interrupt by the electronic control unit 21 at predetermined time intervals.

The electronic control unit 21 determines whether or not a flag F for determining whether or not the temporal addition of the aqueous urea solution through the addition valve 17 is performed is zero (showing that the addition is not being performed) as a process of step S301 of the routine. When it is determined that the flag F is zero, the electronic control unit 21 determines whether or not the temperature T1 of the addition valve 17 is greater than or equal to the reference value M, and the pressure of the aqueous urea solution supplied to the addition valve 17 is limited to the limit value P1 as a process of step S302. If it is determined that it is false, the electronic control unit 21 allows the addition of the aqueous urea solution through the addition valve 17 as a process of step S303. In contrast, if it is determined that it is true in step S302, the electronic control unit 21 inhibits the addition of the aqueous urea solution through the addition valve 17 as a process of step S304.

While the addition of the aqueous urea solution through the addition valve 17 is inhibited as described above, the electronic control unit 21 determines whether or not the amount of NOx in the exhaust gas detected by the NOx sensor 29 is greater than or equal to a threshold value γ as a process of step S305. As the above described threshold value y, an optimal value obtained according to the experiments in advance as a value for determining whether or not the amount of the NOx present in the exhaust gas is permissible is adopted. If it is determined that it is true in the above described step S305, the electronic control unit 21 sets the flag F as one (showing that the addition is performed) as a process of step S306, and then sets limit cancel time t as time for temporarily adding the aqueous urea solution through the addition valve 17 as a process of step S307. As for the limit cancel time t, it is preferable that the limit cancel time t be set as variable on the basis of the temperature T1 of the addition valve 17 such that the greater the temperature T1 is as shown in Fig. 7, for example, the shorter the limit cancel time t becomes.

After the limit cancel time t is set in the step S307, the process proceeds to step S308. Further, when the flag F is set to one in the above described step S306, it is determined that the flag F is not zero in step S301. At this time, the processes in the steps S302 to S307 are skipped so that the process proceeds to step S308. The electronic control unit 21 determines whether or not the elapsed time from when the flag F is set to one is prior to the elapse of the above described limit cancel time t as a process of step S308. If it is determined that it is true, the electronic control unit 21 controls the pressure of the aqueous urea solution supplied to the addition valve 17 to the prescribed value Pb by the control of driving the pump 16 to increase the above described pressure from the limit value P1 to the prescribed value Pb as a process of step S309. Further, the electronic control unit 21 controls driving of the addition valve 17 to perform the addition of the aqueous urea solution through the addition valve 17 as a process of step S310. The aqueous urea solution is added through the addition valve 17 as described above so that the purification of the NOx in the exhaust gas is performed by the first NOx purification catalyst 11 and the second NOx purification catalyst 12.

In contrast, if it is determined that the elapsed time from when the flag F is set to one is over the above described limit cancel time t in the process of step S308, the electronic control unit 21 sets the flag F to zero in a process of step S311, and then limits the pressure of the aqueous urea solution supplied to the addition valve 17 to the limit value P1 by the control of driving the pump 16 as a process of step S312. As a result, the pressure of the aqueous urea solution supplied to the addition valve 17 is lowered from the prescribed value Pb to the limit value P1. Accordingly, the above described limit of the pressure of the aqueous urea solution is resumed. Further, the electronic control unit 21 inhibits the addition of the aqueous urea solution through the addition valve 17 as a process of step S311. The above described inhibition of the addition of the aqueous urea solution is resumed.

According to the present embodiment, the following advantages are obtained in addition to the advantages (1) to (3) obtained by the first embodiment.
(5) In the case where the addition of the aqueous urea solution through the addition valve 17 is inhibited, when the amount of the NOx in the exhaust gas passing through the exhaust passage 8 is greater than or equal to the threshold value γ, the pressure of the aqueous urea solution supplied to the addition valve 17 is increased to the above described prescribed value Pb and the addition of the aqueous urea solution through the addition valve 17 is performed as well during only a predetermined period until the elapsed time from when the flag F is set to one is over the limit cancel time t. Thereby, advantages similar to the advantage that the corrosion of the addition valve is limited as described in the above advantage (1), and the advantage that the occurring of the ammonia slip is avoided as described in the above advantage (4) are obtained, while the addition of the aqueous urea solution through the addition valve 17 is performed when the amount of the NOx in the exhaust gas is high so that the NOx in the exhaust gas is purified by the first NOx purification catalyst 11 and the second NOx purification catalyst 12.
(6) The above described limit cancel time t is set variable such that the higher the temperature T1 of the addition valve 17 is, the shorter the limit cancel time t becomes. Accordingly, when the temperature T1 of the addition valve 17 is high, the phenomenon is avoided that the period in which the pressure of the aqueous urea solution supplied to the addition valve 17 is increased to the prescribed value Pb to perform the temporal addition of the fuel through the addition valve 17 becomes too long.

### Other Embodiments

The above embodiments may be modified as follows, for example.
- In the third embodiment, it is not necessary to set the limit cancel time t as variable. It may be fixed to an optimal time defined through experiments.
- In each of the above described embodiments, the temperature T1 of the addition valve 17 is obtained by the computation (estimation) using the equation (1). The temperature T1 may be obtained by any estimation method other than this.
- In each of the above described embodiments, the temperature T1 of the addition valve 17 may be obtained through measurement by the temperature sensor.
- In each of the above described embodiments, the amount of the NOx in the exhaust gas is detected by the NOx sensor 29. Alternatively, the amount of the NOx in the exhaust gas may be estimated on the basis of the engine operation state. In this case, it is not necessary to provide the NOx sensor 29. Accordingly, the number of parts of the reducing agent feeder may be limited.
- In each of the above described embodiments, only one of the first NOx purification catalyst 11 and the second NOx purification catalyst 12 may be provided.
- in each of the above described embodiments, the reducing agent solution other than the aqueous urea solution may be used.

### Description of the Reference Numerals

1...Internal Combustion Engine, 2...Combustion Chamber, 3...Intake Passage, 4...Turbocharger, 4a...Compressor Wheel, 4b...Turbine Wheel, 5...Intercooler, 6...Intake Throttle Valve, 7...Fuel Injection Valve, 8... Exhaust Passage, 9... First Oxidation Catalyst, 10...Filter, 11...First NOx Purification Catalyst, 12...Second NOx Purification Catalyst, 13... Second Oxidation Catalyst, 15...Tank, 16...Pump, 17...Addition Valve, 18...Dispersion Plate, 19...Accelerator Pedal, 20...Crankshaft, 21...Electronic Control Unit, 22...Vehicle Speed Sensor, 23...Ambient Temperature Sensor, 24...Accelerator Position Sensor, 25...Air Flow Meter, 26...Intake Pressure Sensor, 27...Crank Position Sensor, 28...Exhaust Gas Temperature Sensor, 29... NOx Sensor, and 30... Pressure Sensor.

## Claims

1. A reducing agent feeder comprising:
an addition valve (17), which is adapted to add a reducing agent solution to an exhaust passage (8) of an internal combustion engine (1) in response to a supply of the reducing agent solution pressurized to a prescribed value; and
a pressure control portion (21), which is adapted to, when a temperature of the addition valve (17) is greater than or equal to a reference value, lower a pressure of the reducing agent solution supplied to the addition valve (17) from the prescribed value to a value at which a boiling point of the reducing agent solution is less than the reference value.

2. The reducing agent feeder according to claim 1, wherein the pressure control portion (21) is adapted to increase the pressure of the reducing agent solution to the prescribed value when the temperature of the addition valve (17) is less than the reference value while the pressure of the reducing agent solution supplied to the addition valve (17) is lowered.

3. The reducing agent feeder according to claim 1 or 2, being further adapted so that, when the pressure of the reducing agent solution supplied to the addition valve (17) is lowered by the pressure control portion (21), the addition of the reducing agent solution through the addition valve (17) to the exhaust passage (8) is inhibited.

4. The reducing agent feeder according to claim 3, being further adapted so that, in a case where the addition of the reducing agent solution through the addition valve (17) to the exhaust passage (8) is inhibited, if an amount of NOx in exhaust gas flowing through the exhaust passage (8) is greater than or equal to a threshold value, the pressure of the reducing agent solution supplied to the addition valve (17) is increased to the prescribed value during only a predetermined period to execute addition of the reducing agent solution through the addition valve (17).

## Patentansprüche

1. Reduktionsmittelzuführer, aufweisend:
ein Eingabeventil (17), das dafür ausgelegt ist, als Reaktion auf eine Zufuhr der Reduktionsmittellösung, die auf einen vorgegebenen Wert druckbeaufschlagt ist, eine Reduktionsmittellösung in einen Abgastrakt (8) einer Verbrennungskraftmaschine (1) einzugeben; und
einen Drucksteuerungsabschnitt (21), der dafür ausgelegt ist, einen Druck der Reduktionsmittellösung, die dem Eingabeventil (17) zugeführt wird, von einem vorgegebenen Wert auf einen Wert zu ändern, bei dem ein Siedepunkt der Reduktionsmittellösung geringer ist als der Referenzwert, wenn eine Temperatur des Eingabeventils (17) gleich oder höher ist als ein Referenzwert.

2. Reduktionsmittelzuführer nach Anspruch 1, wobei der Drucksteuerungsabschnitt (21) dafür ausgelegt ist, den Druck der Reduktionsmittellösung auf den vorgegebenen Wert zu erhöhen, wenn die Temperatur des Eingabeventils (17) niedriger ist als der Referenzwert, während der Druck der Reduktionsmittellösung, die dem Eingabeventil (17) zugeführt wird, verringert wird.

3. Reduktionsmittelzuführer nach Anspruch 1 oder 2, der ferner so konfiguriert ist, dass, wenn der Druck der Reduktionsmittellösung, die dem Eingabeventil (17) zugeführt wird, durch den Drucksteuerungsabschnitt (21) verringert wird, die Eingabe der Reduktionsmittellösung in den Abgastrakt (8) durch das Eingabeventil (17) unterdrückt wird.

4. Reduktionsmittelzuführer nach Anspruch 3, der ferner so konfiguriert ist, dass, in einem Fall, bei dem die Eingabe der Reduktionsmittellösung in den Abgastrakt (8) durch das Eingabeventil (17) unterdrückt wird, falls eine NOₓ-Menge in dem durch den Abgastrakt (8) strömenden Abgas gleich oder größer ist als ein Schwellenwert, der Druck der Reduktionsmittellösung, die dem Eingabeventil (17) zugeführt wird, nur während einer vorgegebenen Zeitdauer auf den vorgegebenen Wert erhöht wird, um die Eingabe der Reduktionsmittellösung durch das Eingabeventil (17) durchzuführen.

## Revendications

1. Dispositif d'alimentation en agent réducteur comprenant :
une vanne d'addition (17), qui est adaptée pour ajouter une solution d'agent réducteur dans un passage d'échappement (8) d'un moteur à combustion interne (1) en réponse à une introduction de la solution d'agent réducteur pressurisée jusqu'à une valeur prescrite ; et
une portion de contrôle de pression (21), qui est adaptée pour, lorsqu'une température de la vanne d'addition (17) est supérieure ou égale à une valeur de référence, abaisser une pression de la solution d'agent réducteur introduite dans la vanne d'addition (17) à partir de la valeur prescrite jusqu'à une valeur à laquelle un point d'ébullition de la solution d'agent réducteur est inférieure à la valeur de référence.

2. Dispositif d'alimentation en agent réducteur selon la revendication 1, dans lequel la portion de contrôle de pression (21) est adaptée pour augmenter la pression de la solution d'agent réducteur jusqu'à la valeur prescrite lorsque la température de la vanne d'addition (17) est inférieure à la valeur de référence alors que la pression de la solution d'agent réducteur introduite dans la vanne d'addition (17) est abaissée.

3. Dispositif d'alimentation en agent réducteur selon la revendication 1 ou 2, étant de plus adapté pour que, lorsque la pression de la solution d'agent réducteur introduite dans la vanne d'introduction (17) est abaissée par la portion de contrôle de pression (21), l'addition de la solution d'agent réducteur par la vanne d'addition (17) dans le passage d'échappement (8) soit inhibée.

4. Dispositif d'alimentation en agent réducteur selon la revendication 3, étant de plus adapté pour que, dans un cas où l'addition de la solution d'agent réducteur par la vanne d'addition (17) dans le passage d'échappement (8) est inhibée, si une quantité de NOx dans l'écoulement de gaz d'échappement à travers le passage d'échappement (8) est supérieure ou égale à une valeur seuil, la pression de la solution d'agent réducteur introduite dans la vanne d'addition (17) est augmentée jusqu'à la valeur prescrite pendant uniquement une période prédéterminée pour exécuter l'addition de la solution d'agent réducteur par la vanne d'addition (17).
